# FASCICULE DE BREVET EUROPEEN

(11) **EP 4 258 063 B1**
(45) Date de publication et mention de la délivrance du brevet: **11.03.2026**
(21) Numéro de dépôt: 23163999.8
(22) Date de dépôt: 24.03.2023
(51) Int. Cl.: G04B 5/16, B29C 70/00, G04B 29/02, G04B 37/22, G04D 3/00

(54) **ASSEMBLAGE D'UN COMPOSANT HORLOGER EN COMPOSITE**
MONTAGE EINES UHRWERKKOMPONENTEN AUS VERBUNDWERKSTOFFEN
ASSEMBLY OF A COMPOSITE WATCH COMPONENT

(30) Priorité: 06.04.2022 CH 3822022
(43) Date de publication de la demande: 11.10.2023
(73) Titulaire: Richemont International S.A., 1752 Villars-sur-Glâne (CH)
(72) Inventeur: MEYNET, Florent, 01630 Saint Genis Pouilly (FR)
(74) Mandataire: Novagraaf International SA

(56) Documents cités:
- WO-A1-2018/115009
- CH-A2- 711 914
- JP-A- 2005 114 495
- US-A1- 2019 202 145

## Description

La présente invention concerne de manière générale le domaine de l'horlogerie et de la joaillerie, plus particulièrement le domaine de la fabrication de composants horlogers, comme par exemple les composants de boîtes de montre, les carrures, des cadrans, masses oscillantes, supports de masses oscillantes, platines, ponts, etc.

L'une des fonctions de la boite de montre est de loger le mouvement et de le protéger de l'environnement et des chocs. Aussi, de manière générale, les boites de montre sont rigides, notamment en métal tel que de l'acier ou de l'or. Il existe également des montres réalisées dans des matières plastiques, qui offrent également une certaine rigidité.

Le document CH711914 divulgue un procédé pour fabriquer un boîtier de montre en fibres de carbone. Le document WO2018/115009 divulgue un composant horloger en matériau composite. Toutefois, la fabrication proposée dans ce document ne permet pas de réaliser des composants horlogers avec une résistance optimisée, en particulier pour certaines zones du composant, ni ne permet d'optimiser l'esthétisme. En outre, la fabrication proposée dans ce document impose de reprendre le composant en post-traitement (par exemple usinage/polissage) de façon importante.

La présente invention a pour but de proposer une nouvelle construction de composant horloger ou joaillier, tel qu'une boîte de montre, qui offrent une plus grande variété de choix de couleur, d'aspect, de texture ou d'une manière générale d'esthétisme et d'ergonomie, tout en étant plus facile, plus flexible et plus rapide à fabriquer notamment. Il est en outre souhaité de réduire ou limiter autant que possible le recours à l'étape de post-traitement (par exemple usinage et polissage). En particulier, les nouvelles possibilités proposées procurent une expérience d'utilisation améliorée. En outre, il est souhaité de pouvoir améliorer le recyclage des composants.

L'invention concerne un procédé de fabrication d'un composant horloger ou joaillier comprenant les étapes suivantes :
- se munir d'une première pièce composite avec un premier renfort et une première matrice comprenant une première résine thermoplastique,
- se munir d'une deuxième pièce composite avec un deuxième renfort et une deuxième matrice comprenant une deuxième résine thermoplastique,
- fixer la première pièce composite sur la deuxième pièce composite en polymérisant une interface entre la première pièce composite et la deuxième pièce composite, de sorte à former le composant horloger ou joaillier.

On entend notamment par renfort une armature ou une ossature. On entend notamment par matrice un liant qui assure la cohésion entre les différents éléments d'une armature, en particulier une armature formée de fibres, de tissus, etc. Il est également fait référence à un continuum constitué d'un polymère dans lequel peuvent se trouver dispersées des parties non miscibles avec lui. Le liant peut assurer la cohésion de la structure et transmettre les efforts au renfort.

Ceci permet de faciliter la fabrication du composant horloger ou joailler, notamment grâce à une fabrication plus rapide et plus flexible. En outre, ceci permet d'améliorer le choix de couleur, d'aspect, de texture et d'une manière générale d'esthétisme et d'ergonomie. Ainsi, l'expérience d'utilisation est améliorée. En outre, le recyclage des composants peut être amélioré. Ainsi, ceci permet de proposer un composant horloger recyclable et re-polymérisable, facile à fabriquer et dont la conception est facilitée en permettant une grande liberté de formes et de couleurs, en particulier grâce à l'utilisation de pigments. De plus, le recours au post-traitement (par exemple usinage, polissage) est réduit ou limité grâce au choix de la première pièce composite et de la deuxième pièce composite, et de leur agencement.

Avantageusement, l'interface est une couche intermédiaire comprenant une troisième résine thermoplastique.

Avantageusement, le composant horloger ou joaillier est exempt de pièce de liaison supplémentaire entre la première pièce composite, la deuxième pièce composite et la couche intermédiaire.

Ceci permet d'éviter toute nécessité de consolidation ultérieure avec une pièce additionnelle structurelle.

Avantageusement, la couche intermédiaire est une couche de fixation, une couche adhésive, une interface de fixation ou une interface de collage.

Avantageusement, la couche intermédiaire est interposée entre la première pièce composite et la deuxième pièce composite.

Avantageusement, la première pièce composite est accostée au niveau de, ou contre, la deuxième pièce composite.

Avantageusement, la première pièce composite et/ou la deuxième pièce composite sont déjà formées avant d'apposer la couche intermédiaire.

Avantageusement, la première résine de la première pièce composite et/ou la deuxième résine de la deuxième pièce composite ne sont pas (complètement) figées avant d'apposer la couche intermédiaire.

Avantageusement, le procédé comprend en outre l'étape consistant à :
- appliquer la couche intermédiaire sur l'une et/ou l'autre de la première pièce composite et de la deuxième pièce composite.

Avantageusement, le procédé comprend en outre l'étape consistant à :
- appliquer la couche intermédiaire sur le renfort ou sur la matrice de l'une et/ou l'autre de la première pièce composite et de la deuxième pièce composite.

Avantageusement, l'interface est chauffée au moins localement afin de rendre solidaire la première pièce composite et la deuxième pièce composite.

Avantageusement, la première pièce composite et/ou la deuxième pièce composite comprend l'interface.

Avantageusement, l'interface est polymérisée localement afin de rendre solidaire la première pièce composite et la deuxième pièce composite.

Avantageusement, l'interface comprend un activateur de polymérisation, c'est-à-dire que la première pièce composite ou la deuxième pièce composite comprend au moins localement l'activateur. Avantageusement, la première pièce composite ou la deuxième pièce composite comprend un gradient d'activateur, avec plus d'activateur au niveau de l'interface.

Ceci permet de faciliter la fabrication du composant horloger ou joailler, notamment grâce à une fabrication plus rapide et plus flexible.

Avantageusement, le premier renfort et/ou le deuxième renfort comprend des fibres.

Avantageusement, le premier renfort et/ou le deuxième renfort comprend des fibres de carbone, de basalte, de verre, de quartz ou de céramique comme par exemple d'alumine, des fibres minérales, des fibres synthétiques comme de l'aramide ou du polyester, ou des fibres naturelles comme des fibres de lin, de chanvre, de jute, de coco, de bois ou tout autre matériau adapté. La fibre céramique peut être approvisionnée par exemple auprès du fabricant 3M.

Ceci permet de proposer un composant horloger ou joaillier avec des renforts recyclables et/ou résistants, tout en offrant des qualités esthétiques appréciées.

Avantageusement, le premier renfort et/ou le deuxième renfort comprend un matériau amorphe ou un plastique (y compris un thermoplastique).

Avantageusement, le procédé comprend en outre l'étape suivante :
- polymériser la couche intermédiaire.

Avantageusement, la polymérisation est effectuée grâce à un apport de chaleur sur la couche intermédiaire.

Avantageusement, la couche intermédiaire est frittée.

Avantageusement, la polymérisation est effectuée grâce à un apport de chaleur sur la première pièce composite ou sur la deuxième pièce composite.

Avantageusement, la polymérisation est effectuée grâce à une irradiation par lumière, en particulier par une lumière dans la gamme de rayonnement ultraviolet.

Ceci permet de figer la couche intermédiaire afin de réaliser le composant horloger ou joaillier dans la conception prévue.

Avantageusement, le procédé comprend en outre l'étape suivante :
- ajouter un activateur à la couche intermédiaire.

Avantageusement, l'ajout de l'activateur est réalisé après la pose de la couche intermédiaire.

Avantageusement, l'ajout de l'activateur est réalisé avant la pose de la couche intermédiaire.

Avantageusement, l'activateur comprend du sel de cuivre et/ou un amine aliphatique.

Avantageusement, l'activateur comprend un solvant tel que de l'acétone.

Avantageusement, l'activateur est utilisé lorsqu'une température appliquée sur les éléments est inférieure à 20 degrés Celsius, de préférence inférieure à 15 degrés Celsius, ou inférieure à une température ambiante.

Ceci permet de faciliter la prise ou la fixation de la couche intermédiaire sur la première pièce composite et la deuxième pièce composite, notamment en l'absence de chauffage de la pièce à fabriquer. En particulier, il est possible de travailler à température ambiante (par exemple entre 15 et 30 degrés Celsius) en présence de l'activateur. En outre, au-delà d'une température de 50 degrés Celsius environ, il peut ne plus être nécessaire de prévoir un activateur.

Avantageusement, le procédé comprend en outre l'étape suivante :
- chauffer la couche intermédiaire entre la première pièce composite et la deuxième pièce composite.

Avantageusement, une température de chauffage appliquée sur la pièce à chauffer est ou supérieure à 30 degrés Celsius, ou préférentiellement supérieure à 40 degrés Celsius, préférentiellement supérieure à 50 degrés Celsius, plus préférentiellement supérieure à 60 degrés et encore plus préférentiellement supérieure à 80 degrés. Avantageusement, une température de chauffage appliquée sur la pièce à chauffer est inférieure à 220 degrés Celsius.

Avantageusement, au moins deux de la première matrice, de la deuxième matrice et de la couche intermédiaire sont issues d'un même matériau.

Avantageusement, la première matrice, la deuxième matrice et la couche intermédiaire sont issues d'un même matériau.

Avantageusement, le premier renfort et le deuxième renfort sont différents.

Avantageusement, le premier renfort et le deuxième renfort sont identiques.

Ceci permet de proposer un composant horloger facile à réaliser tout en optimisant ses propriétés mécaniques, chimiques, esthétiques ou ergonomiques.

Avantageusement, les fibres de la première pièce composite peuvent être de la même couleur ou d'une couleur différente des fibres de la deuxième pièce composite.

Avantageusement, les fibres de la première pièce composite peuvent être de la même couleur ou d'une couleur différente de la matrice de la première pièce composite ou de la deuxième pièce composite.

Avantageusement, la couche intermédiaire peut être de la même couleur que la première pièce composite (i.e que son renfort ou que sa matrice).

Avantageusement, la couche intermédiaire peut être de la même couleur que la deuxième pièce composite (i.e que son renfort ou que sa matrice).

Ceci permet de faciliter la fabrication du composant horloger ou joailler, notamment grâce à une fabrication plus rapide et plus flexible, tout en optimisant les qualités esthétiques ou ergonomiques.

Avantageusement, le procédé comprend en outre l'étape suivante :
- la première pièce composite ou la deuxième pièce composite sont abrasées ou poncées de sorte à faire ressortir des fibres du premier renfort ou du deuxième renfort.

Avantageusement, le procédé comprend en outre l'étape suivante :
- la première pièce composite ou la deuxième pièce composite sont abrasées ou poncées de sorte à créer une projection sur l'une de la première pièce composite et de la deuxième pièce composite, et à créer un renfoncement dans l'autre de la première pièce composite et de la deuxième pièce composite.

Avantageusement, le procédé comprend en outre l'étape suivante :
- la première pièce composite ou la deuxième pièce composite sont abrasées ou poncées de sorte à créer une forme sur l'une de la première pièce composite et de la deuxième pièce composite, et à créer une contre forme dans l'autre de la première pièce composite et de la deuxième pièce composite.

Ceci permet d'améliorer la prise de la couche intermédiaire et la tenue mécanique du composant horloger ou joaillier, tout en améliorant l'esthétisme et/ou l'ergonomie du composant horloger ou joaillier.

Un deuxième aspect concerne un composant horloger ou joaillier fabriqué selon le procédé du premier aspect.

Ceci permet de proposer un composant horloger ou joaillier dont la fabrication est facilitée, notamment grâce à une fabrication plus rapide et plus flexible. En outre, ceci permet d'améliorer le choix de couleur, d'aspect, de texture et d'une manière générale d'esthétisme et d'ergonomie. Ainsi, l'expérience d'utilisation est améliorée. En outre, le recyclage des composants peut être amélioré. Ainsi, ceci permet de proposer un composant horloger recyclable et re-polymérisable, facile à fabriquer et dont la conception est facilitée en permettant une grande liberté de formes et de couleurs.

Un troisième aspect concerne un composant horloger ou joaillier comprenant :
- une première pièce composite avec un premier renfort et une première matrice comprenant une première résine thermoplastique,
- une deuxième pièce composite avec un deuxième renfort et une deuxième matrice comprenant une deuxième résine thermoplastique,
- une couche intermédiaire entre la première pièce composite et la deuxième pièce composite, la couche intermédiaire comprenant une troisième résine thermoplastique.

Ceci permet de proposer un composant horloger ou joaillier dont la fabrication est facilitée, notamment grâce à une fabrication plus rapide et plus flexible. En outre, ceci permet d'améliorer le choix de couleur, d'aspect, de texture et d'une manière générale d'esthétisme et d'ergonomie. Ainsi, l'expérience d'utilisation est améliorée. En outre, le recyclage des composants peut être amélioré. Ainsi, ceci permet de proposer un composant horloger recyclable et re-polymérisable, facile à fabriquer et dont la conception est facilitée en permettant une grande liberté de formes et de couleurs.

En d'autres termes, l'invention concerne un composant horloger ou joaillier comprenant :
- une première pièce composite avec un premier renfort et une première matrice comprenant une première résine thermoplastique,
- une deuxième pièce composite avec un deuxième renfort et une deuxième matrice comprenant une deuxième résine thermoplastique,
- une interface entre la première pièce composite et la deuxième pièce composite, l'interface étant de préférence une couche intermédiaire comprenant une troisième résine thermoplastique.

Avantageusement, le composant horloger ou joaillier comprend :
- une première pièce composite avec un premier renfort et une première matrice comprenant une première résine thermoplastique,
- une deuxième pièce composite avec un deuxième renfort et une deuxième matrice comprenant une deuxième résine thermoplastique,
- une interface entre la première pièce composite et la deuxième pièce composite, l'interface étant de préférence une portion de la première pièce composite ou de la deuxième pièce composite. En d'autres termes, l'interface peut être une portion agencée à une extrémité de l'une de la première pièce composite ou de la deuxième pièce composition, et en contact avec l'autre de la première pièce composite ou de la deuxième pièce composite.

Avantageusement, la couche intermédiaire peut être exempte de renfort.

Ceci permet de rendre d'améliorer la flexibilité de la fabrication.

Avantageusement, la couche intermédiaire peut présenter un coefficient de raideur plus faible que la première pièce composite ou que la deuxième pièce composite.

Ceci permet de rendre le composant horloger ou joaillier plus souple, en particulier au niveau de la jointure entre la première pièce composite et la deuxième pièce composite. En particulier, ceci permet de proposer un composant plus résistant au choc, avec une certaine capacité d'absorption.

Avantageusement, la couche intermédiaire comprend un troisième renfort (également appelé renfort de couche).

Avantageusement, le renfort de couche de la couche intermédiaire est commun avec le premier renfort ou le deuxième renfort.

Ceci permet d'améliorer la solidité du composant horloger ou joaillier.

Avantageusement, la couche intermédiaire est polymérisée.

Avantageusement, la couche intermédiaire comprend un polymère ou un copolymère.

Avantageusement, la polymérisation est effectuée grâce à un apport de chaleur sur la couche intermédiaire.

Avantageusement, la polymérisation est effectuée grâce à une irradiation par lumière, en particulier par une lumière dans la gamme de rayonnement ultraviolet.

Ceci permet de figer la couche intermédiaire afin de réaliser le composant horloger ou joaillier dans la conception prévue.

Avantageusement, la couche intermédiaire comprend un activateur (également appelé activateur de polymère ou activateur de polymérisation).

Avantageusement, l'activateur comprend du sel de cuivre et/ou un amine aliphatique.

Avantageusement, l'activateur comprend un solvant tel que de l'acétone.

Avantageusement, l'activateur est utilisé lorsqu'une température appliquée sur les éléments est inférieure à 20 degrés Celsius, de préférence inférieure à 15 degrés Celsius, ou inférieure à une température ambiante.

Ceci permet de faciliter la prise ou la fixation de la couche intermédiaire sur la première pièce composite et/ou sur la deuxième pièce composite, notamment en l'absence de chauffage de la pièce à fabriquer.

Avantageusement, au moins deux de la première matrice, de la deuxième matrice et de la couche intermédiaire sont issues d'un même matériau.

Avantageusement, la première matrice, la deuxième matrice et la couche intermédiaire comprennent un même matériau.

Avantageusement, le premier renfort et le deuxième renfort sont identiques.

Avantageusement, le premier renfort et le deuxième renfort sont différents.

Ceci permet de proposer un composant horloger facile à réaliser tout en optimisant ses propriétés mécaniques, chimiques, esthétiques et ergonomiques.

Avantageusement, la première résine thermoplastique, la deuxième résine thermoplastique ou la troisième résine thermoplastique est une résine thermoplastique comprenant de l'acrylique.

Ceci permet de proposer une résine convenant pour les renforts en verre, carbone ou fibres naturelles notamment.

Avantageusement, la première résine thermoplastique, la deuxième résine thermoplastique ou la troisième résine thermoplastique est une résine thermoplastique avec un ratio de peroxyde à 3 % +/- 1 %, préférentiellement 3 % +/- 0,5 %, très préférentiellement 3 % +/- 0,1 %.

Avantageusement, la première résine thermoplastique, la deuxième résine thermoplastique ou la troisième résine thermoplastique est une résine thermoplastique avec une dureté shore D de 85-90 après polymérisation.

Avantageusement, la résine thermoplastique peut être choisie parmi un polyamide, un polyester, un acrylique, un acide poly lactique, un élastomère, un polyétheréthercétone (PEEK), un polyéthercétonecétone (PEKK), un polyphénylène sulfide (PPS), un polycarbonate (PC) ou d'autres matériaux adaptés, et toute combinaison de ceux-ci.

Avantageusement, la résine thermoplastique peut être thermoformable ou thermosoudable.

Avantageusement, la résine thermoplastique est une mousse polymère.

Un exemple de résine thermoplastique est la résine Elium^{®} 190 disponible auprès de la société Arkema.

Avantageusement, un premier taux de fibre de la première pièce composite est supérieur à un deuxième taux de fibre de la deuxième pièce composite.

Avantageusement, le premier taux de fibre et/ou le deuxième taux de fibre est de 50%.

Avantageusement, le premier taux de fibre et/ou le deuxième taux de fibre est compris entre 10% et 70 %, de préférence exprimé en volume.

Avantageusement, le premier taux de fibre est de 60% et le deuxième taux de fibre est de 40%.

Avantageusement, le premier taux de fibre est de 40% et le deuxième taux de fibre est de 60%.

Avantageusement, le taux de fibre est exprimé en volume relatif.

Avantageusement, le taux de fibre est exprimé en poids relatif, en particulier pour le cas de renforts de type particules.

Avantageusement, une couleur de fibre de la première pièce composite est différente d'une couleur de fibre de la deuxième pièce composite.

Avantageusement, une couleur de fibre de la première pièce composite est identique, similaire ou proche d'une couleur de fibre de la deuxième pièce composite.

Avantageusement, une couleur de la première pièce composite est différente d'une couleur de la deuxième pièce composite, en particulier une couleur de la première résine thermoplastique est différente d'une couleur de la deuxième résine thermoplastique.

Avantageusement, la couleur de la première pièce composite est identique, similaire ou proche de la couleur de la deuxième pièce composite, en particulier la couleur de la première résine thermoplastique est identique, similaire ou proche de la couleur de la deuxième résine thermoplastique.

Ceci permet de proposer un composant horloger facile à réaliser tout en optimisant ses propriétés mécaniques et chimiques, et en améliorant ses qualités esthétiques et ergonomiques.

Avantageusement, la première pièce composite comprend des premières fibres et la deuxième pièce composite comprend des deuxièmes fibres, et dans lequel les premières fibres sont des fibres courtes et les deuxièmes fibres sont des fibres longues.

Avantageusement, la première pièce composite comprend des premières fibres et la deuxième pièce composite comprend des deuxièmes fibres, et dans lequel les premières fibres et les deuxièmes fibres sont choisies parmi des fibres courtes et des fibres longues.

On entend par fibre courte une fibre de longueur inférieure ou égale à 5 mm, et une fibre longue une fibre de longueur supérieur à 5 mm.

Ceci permet d'améliorer les qualités mécaniques du composant ainsi que ses qualités esthétiques et ergonomiques.

Avantageusement, la première pièce composite comprend des premières fibres et la deuxième pièce composite comprend des deuxièmes fibres, et dans lequel les premières fibres sont des fibres longues et les deuxièmes fibres sont des fibres courtes.

Avantageusement, la première pièce composite comprend des premières fibres et la deuxième pièce composite comprend des deuxièmes fibres, et dans lequel les premières fibres et les deuxièmes fibres sont choisies parmi des fibres longues et/ou des fibres courtes.

Avantageusement, la première pièce composite ou la deuxième pièce composite comprend des nanotubes ou des particules.

Ceci permet de résoudre par exemple des problèmes d'étanchéité posé par les fibres.

Avantageusement, la première pièce composite ou la deuxième pièce composite comprend une ou des particules, en particulier de métal, y compris métal précieux ou de pierre précieuse.

Avantageusement, la première pièce composite ou la deuxième pièce composite comprend un pigment, en particulier un pigment sensible à la lumière visible ou non visible.

Avantageusement, la couche intermédiaire comprend en outre un troisième renfort.

Ceci permet d'améliorer les qualités mécaniques du composant ainsi qu'éventuellement ses qualités esthétiques et ergonomiques.

Avantageusement, la première pièce composite comprend au moins une contreforme de la deuxième pièce composite.

Ceci permet d'améliorer les qualités mécaniques du composant ainsi que ses qualités esthétiques et ergonomiques.

Avantageusement, l'une de la première pièce composite ou de la deuxième pièce composite comprend au moins une projection, et l'autre de la première pièce composite ou de la deuxième pièce composite comprend au moins un renfoncement agencé pour recevoir l'au moins une projection.

Avantageusement, l'au moins une projection comprend des fibres du premier renfort ou du deuxième renfort.

Avantageusement, la forme et/ou la contreforme est un picot, un orifice, une portion male ou une portion femelle.

Avantageusement, la couche intermédiaire est adjacente de, ou en contact avec, une interface de butée.

Avantageusement, la première pièce composite, la deuxième pièce composite et la couche intermédiaire sont maintenues sous presse, de préférence jusqu'à la polymérisation de la couche intermédiaire.

Ceci permet d'améliorer la prise de la couche intermédiaire et la tenue mécanique du composant horloger ou joaillier, tout en améliorant l'esthétisme du composant horloger ou joaillier. En particulier, ceci peut permettre de renforcer l'étanchéité.

Avantageusement, au moins une de la première pièce composite ou de la deuxième pièce composite comprend une surface affectée par abrasion recouverte par la couche intermédiaire.

Avantageusement, la surface affectée par abrasion a été abrasée ou poncée de sorte à faire ressortir des fibres de la première pièce composite ou de la deuxième pièce composite. Ceci permet de renforcer la couche intermédiaire.

Avantageusement, le premier renfort et le deuxième renfort sont agencés pour former une continuité des renforts, en particulier en cas d'abrasion de la première pièce composite et de la deuxième pièce composite.

Ceci permet d'améliorer la prise de la couche intermédiaire et la tenue mécanique du composant horloger ou joaillier, tout en améliorant l'esthétisme du composant horloger ou joaillier.

Avantageusement, l'une de la première pièce composite ou de la deuxième pièce composite est chassée dans l'autre de la première pièce composite ou de la deuxième pièce composite.

Avantageusement, l'une de la première pièce composite ou de la deuxième pièce composite est emboîtée dans l'autre de la première pièce composite ou de la deuxième pièce composite.

D'autres caractéristiques et avantages de la présente invention apparaîtront plus clairement à la lecture de la description détaillée qui suit, de modes de réalisation de l'invention donnés à titre d'exemple nullement limitatif et illustrés par les dessins annexés, dans lesquels :
- la figure 1 représente une vue éclatée d'un composant horloger ou joaillier selon un premier mode de réalisation de la présente invention,
- la figure 2 représente une vue du composant horloger ou joaillier selon le premier mode de réalisation de la présente invention,
- la figure 3 représente une vue de côté du composant horloger ou joaillier selon le premier mode de réalisation de la présente invention,
- la figure 4 représente une autre vue de côté du composant horloger ou joaillier selon le premier mode de réalisation de la présente invention,
- la figure 5 représente une vue éclatée du composant horloger ou joaillier selon un deuxième mode de réalisation de la présente invention.

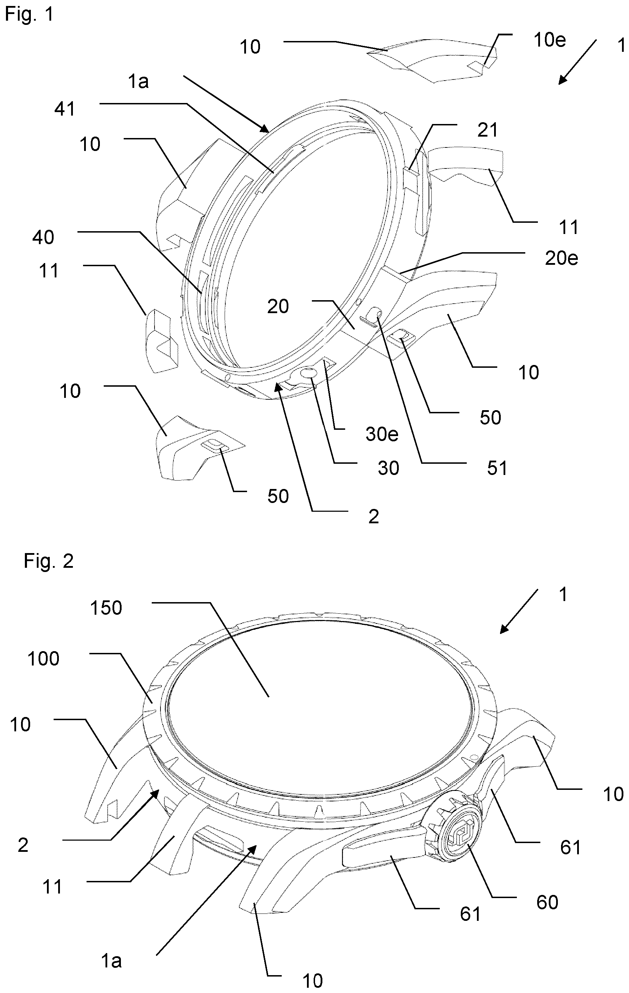

La figure 1 représente une vue éclatée d'un composant horloger ou joaillier selon un premier mode de réalisation de la présente invention.

Le premier mode de réalisation du composant horloger ou joaillier est une boîte de montre 1.

La boîte de monte 1 comprend une carrure 2, des cornes extérieures 10 et des cornes centrales 11 formant ensemble les cornes 10, 11.

La carrure 2 comprend une bande de carrure avec un orifice 30 agencé pour recevoir une couronne 60 visible en figure 2. Des épaulements 30e sont agencés à proximité de l'orifice 30, comme il sera expliqué plus en détails en référence à la figure 2.

La couronne sert typiquement à régler la montre (par exemple heures, minutes, dates), ou à remonter le ressort de barillet. La carrure 2 peut comprendre à l'intérieur des encoches 41 afin de supporter un mouvement de la montre. En outre, la carrure 2 peut comprendre à l'intérieur des revidages 40 afin de diminuer le poids de la carrure 2, par analogie avec les carrures en or et afin notamment de conserver une cohérence de conception, le cas échéant.

La carrure 2 est un exemple de première pièce composite 1a, ayant un premier renfort et une première matière thermoplastique, et dont on peut se munir ou que l'on peut fournir en référence au procédé de fabrication.

Les cornes extérieures 10 et/ou les cornes centrales 11 sont un exemple de deuxième pièce composite ayant un deuxième renfort et une deuxième résine thermoplastique, et dont on peut se munir ou que l'on peut fournir en référence au procédé de fabrication.

Les cornes extérieures 10 sont assemblées sur la carrure 2 au niveau d'une contreforme 20 d'une forme des cornes extérieures 10. Les cornes centrales 101 sont assemblées sur la carrure 2 au niveau d'une contreforme 21 d'une forme des cornes centrales 11.

En outre, les cornes extérieures 10 peuvent comprendre un orifice 50 afin de laisser le passage à une vis ou un pion coopérant avec un trou taraudé ou lisse 51 de la carrure 2.

Les cornes extérieures 10 peuvent comprendre un évidement 10e de sorte à recevoir une barrette et permettre la fixation d'un bracelet de montre.

La carrure 2 comprend comme indiqué ci-avant le premier renfort et la première matrice. Le premier renfort est composé de fibres longues qui sont de préférence agencées tangentiellement ou de façon circulaire, afin d'améliorer la tenue mécanique de la carrure 2. En d'autres termes, les fibres (longues) du premier renfort sont enroulées afin de suivre la forme générale de la carrure 2. De préférence, les fibres sont enroulées sur un diamètre sensiblement équivalent à celui de la carrure 2 afin de la conformer. En outre ou alternativement, les fibres peuvent être tissées, en particulier les fibres longues. Les fibres peuvent être aussi non tissées, comme par exemple pour le carbone forgé.

Les cornes extérieures 10 et les cornes centrales 11 comprennent le deuxième renfort qui peut être composé de fibres courtes, par exemple longitudinalement dans le sens d'une direction principale des cornes 10, 11. Les fibres peuvent être orientées linéairement.

Les cornes extérieures 10 sont ensuite fixées sur la carrure 2 au moyen d'une couche intermédiaire composée d'une troisième résine thermoplastique, de sorte à former la boîte de montre 1.

De la même façon, les cornes centrales 11 sont fixées sur la carrure 2 au moyen de la couche intermédiaire composée de la troisième résine thermoplastique.

La couche intermédiaire est ainsi polymérisée lorsque le corne extérieure 10 est en contact ou accoste la contreforme 20. L'opération peut être répétée pour chaque corne 10, 11 et sa contreforme respective 20, 21.

En outre, il est possible d'abuter les cornes extérieures 10 sur des épaulements 20e des contreformes 20, afin d'améliorer le positionnement des cornes extérieures 10 et d'améliorer la précision de l'ensemble tout en limitant les étapes de finition ou de retouches géométriques.

La couche intermédiaire peut comprendre un activateur afin d'accélérer (ou de permettre) la polymérisation de la couche intermédiaire. Par exemple, il est possible de prévoir un activateur dans la couche intermédiaire mais pas d'activateur pour la première pièce composite et/ou la deuxième pièce composite. De la sorte, la polymérisation de la couche intermédiaire peut être réalisée à une température plus basse que la première pièce composite et/ou la deuxième pièce composite. En outre, il est possible de prévoir un chauffage local pour éviter de déformer les pièces à assembler, par exemple par chauffage à ultrasons ou à ultraviolets.

Il est en outre possible de chauffer les pièces et/ou la couche intermédiaire afin d'améliorer la polymérisation.

De préférence, la première matrice, la deuxième matrice et la couche intermédiaire sont composées de la même résine thermoplastique.

Un exemple d'une telle résine thermoplastique est la résine Elium^{®} 190 disponible auprès de la société Arkema.

D'une manière générale, les résines thermoplastiques et les résines thermodurcissables sont deux formes polymériques différentes qui se distinguent notamment l'une de l'autre par la réaction qu'elles présentent après application de chaleur. La différence la plus importante est que, une fois que les résines thermodurcissables sont chauffées puis refroidies, elles ne peuvent plus être modifiées ou moulées, tandis que les résines thermoplastiques sont dures à la température ambiante mais, lorsqu'elles sont chauffées, elles redeviennent malléables et moulables jusqu'à ce qu'elles refroidissent à nouveau; au cours de ce processus, la structure chimique ne change pas et le processus peut être répété plusieurs fois. Une résine thermoplastique est constituée de chaînes linéaires ou ramifiées à liaisons covalentes. Ces chaînes sont liées entre elles par des liaisons faibles de type Van der Waals et hydrogène par exemple. Les thermoplastiques peuvent être dissous dans certains solvants et se ramollissent à la chaleur d'où le terme « thermoplastique ». Il existe principalement deux techniques de recyclage : une technique dite thermomécanique consiste par exemple à agglomérer des broyats de composites thermoplastiques en plaques aux caractéristiques techniques proches de celles de composites originaux ; une autre stratégie envisage de dépolymériser les résines pour en extraire le monomère qui constituait, à la base, la matrice du composite.

Il est possible de prévoir un taux de fibres particulier pour le premier renfort, comme par exemple 60% ou 50%.

De la même façon, il est possible de prévoir un taux de fibre particulier pour le deuxième renfort, comme par exemple 40%.

En outre, il est possible de prévoir des nanotubes ou des particules, y compris des nanoparticules, en particulier pour la première pièce composite, afin d'améliorer l'étanchéité par exemple.

Dans un mode de réalisation préféré, les cornes extérieures 10 peuvent comprendre une projection agencée pour s'accoupler avec l'orifice 51 de la carrure 2. L'orifice 51 est alors un exemple de renfoncement.

Dans un mode de réalisation préféré, la surface de la carrure 2, par exemple au niveau de la contreforme 20, est abrasée (ou affectée par abrasion) et est recouverte par la couche intermédiaire. Ceci permet de créer un troisième renfort pour la troisième résine thermoplastique et renforce ainsi la solidité de l'ensemble. En outre, le troisième renfort de la couche intermédiaire peut être indépendant du premier renfort ou du deuxième renfort.

La figure 2 représente une vue du composant horloger ou joaillier selon le premier mode de réalisation de la présente invention.

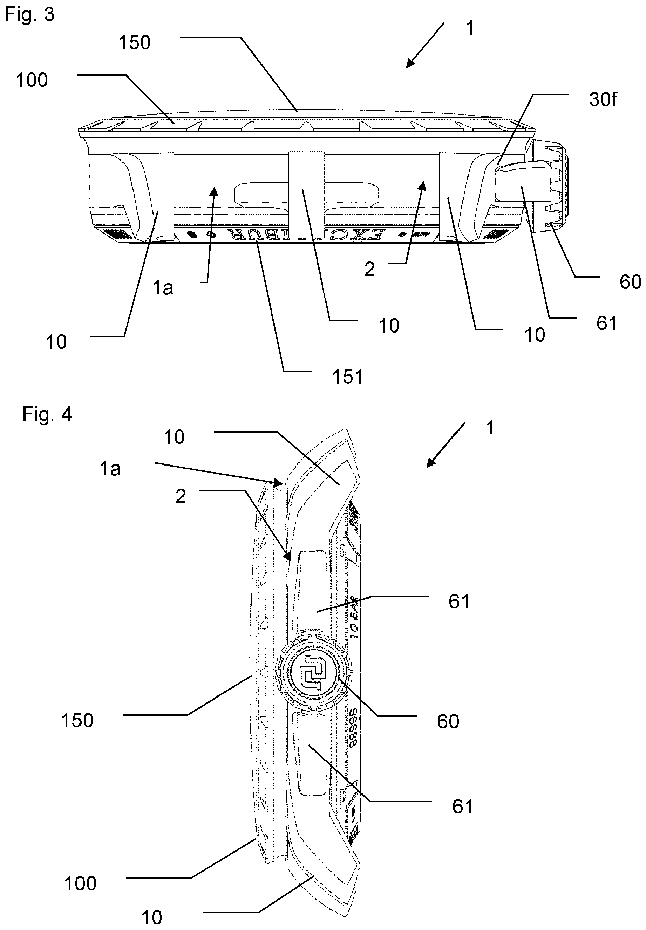

La boîte de montre 1 est fermée par une glace 150 et un fond 151 opposé visible en figure 3.

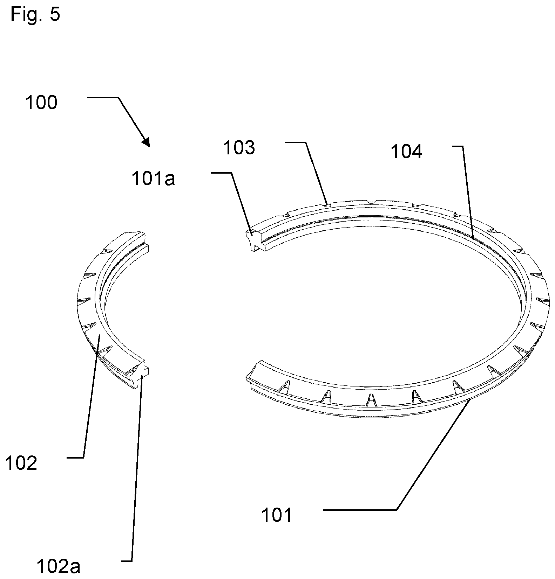

La boîte de montre 1 peut en outre être équipée d'une lunette 100 agencée en périphérique de la glace 150, et qui sera décrite avec plus de détails en figure 5.

La boîte de montre 1 peut en outre être équipée de la couronne 60 comme indiqué précédemment.

Dans un mode de réalisation préféré, la boîte de montre 1 comprend en outre des pièces de protection 61 agencées en périphérique de la couronne 60.

Ces protections 61 sont un autre exemple de deuxième pièce composite et peuvent être réalisées de façon similaire. Ces protections 61 peuvent notamment comprendre un renfort adapté pour offrir une bonne résistance aux chocs, par exemple des particules céramiques de type oxyde, carbure ou nitrure (alumine, zircone, carbure de silicium, carbure de bore, nitrure de titane...). En particulier, il est possible de prévoir des projections, comme des projections épaulées, afin de coopérer avec des épaulements 30e de la carrure 2, à proximité de l'orifice 30 destiné à recevoir la couronne 60.

La figure 3 représente une vue de côté du composant horloger ou joaillier selon le premier mode de réalisation de la présente invention.

La boîte de montre 1 est représentée avec le fond 151 fermant la boîte, et opposé à la glace 150.

Des évidements 30f sont également prévus afin de former une contreforme des pièces de protection 61, et mieux les positionner et/ou les recevoir.

La figure 4 représente une autre vue de côté du composant horloger ou joaillier selon le premier mode de réalisation de la présente invention.

La boîte de montre 1 est représentée avec la lunette 100 qui sera décrite plus en détails en référence à la figure 5.

La figure 5 représente une vue éclatée du composant horloger ou joaillier selon un deuxième mode de réalisation de la présente invention.

La lunette 100 est formée d'une première portion 101 et d'une deuxième portion 102.

La première portion 101 est un exemple de première pièce composite.

La deuxième portion 102 est un exemple de deuxième pièce composite.

La première portion 100 peut ainsi être composée du premier renfort (de préférence avec des fibres) et de la première résine d'une première couleur.

La deuxième portion 102 peut ainsi être composée du deuxième renfort (de préférence avec des fibres) et de la deuxième résine d'une deuxième couleur, différente de la première couleur. Ainsi, il est possible de réaliser un composant horloger composite avec plusieurs couleurs plus facilement.

La première portion 101 et la deuxième portion 102 sont fixées l'une à l'autre au niveau de surfaces d'accostage respectives 101a et 102a, au moyen de la couche intermédiaire formée de la troisième résine thermoplastique.

La lunette 100 peut comprendre des encoches 103 afin de faciliter la préhension de la lunette 100, en particulier en cas de lunette 100 montée pivotante sur la boîte de montre 1.

Les fibres peuvent ainsi agencées de façon radiale ou tangentielle. Les fibres peuvent présenter un contournement au niveau des encoches 103, de sorte à améliorer la tenue mécanique.

La lunette 100 peut comprendre en outre un épaulement ou une rainure circulaire 104 pour recevoir la glace 150.

On comprendra que diverses modifications et/ou améliorations évidentes pour l'homme du métier peuvent être apportées aux différents modes de réalisation de l'invention décrits dans la présente description.

En particulier, il est fait référence à la possibilité de modifier les couleurs des pièces.

## Revendications

1. Procédé de fabrication d'un composant horloger ou joaillier (1) comprenant les étapes suivantes :
- se munir d'une première pièce composite (1a, 101) avec un premier renfort et une première matrice comprenant une première résine,
- se munir d'une deuxième pièce composite (10, 11, 102) avec un deuxième renfort et une deuxième matrice comprenant une deuxième résine,
- fixer la première pièce composite (1a, 101) sur la deuxième pièce composite (10, 11, 102) en polymérisant une interface entre la première pièce composite (1a, 101) et la deuxième pièce composite (10, 11, 102), de sorte à former le composant horloger ou joaillier (1), le procédé étant **caractérisé en ce que** la première et la deuxième résine sont des résines thermoplastiques.

2. Procédé de fabrication selon la revendication précédente, dans lequel l'interface est une couche intermédiaire comprenant une troisième résine thermoplastique.

3. Procédé de fabrication selon la revendication précédente, comprenant en outre l'étape suivante :
- ajouter un activateur à la couche intermédiaire.

4. Procédé de fabrication selon l'une des revendications 2 à 3, comprenant en outre l'étape suivante :
- chauffer la couche intermédiaire entre la première pièce composite (1a, 101) et la deuxième pièce composite (10, 11, 102).

5. Procédé de fabrication selon l'une des revendications 2 à 4, dans lequel au moins deux de la première matrice, de la deuxième matrice et de la couche intermédiaire sont issues d'un même matériau.

6. Procédé de fabrication selon l'une des revendications précédentes, dans lequel le premier renfort et le deuxième renfort sont différents.

7. Composant horloger ou joaillier (1) comprenant :
- une première pièce composite (1a, 101) avec un premier renfort et une première matrice comprenant une première résine,
- une deuxième pièce composite (10, 11, 102) avec un deuxième renfort et une deuxième matrice comprenant une deuxième résine,
- une couche intermédiaire entre la première pièce composite (1a, 101) et la deuxième pièce composite (10, 11, 102), la couche intermédiaire comprenant une troisième résine, le composant étant **caractérisé en ce que** la première, la deuxième et la troisième résine sont des résines thermoplastiques.

8. Composant horloger ou joaillier (1) selon la revendication précédente, dans lequel au moins deux de la première matrice, de la deuxième matrice et de la couche intermédiaire sont issues d'un même matériau.

9. Composant horloger ou joaillier (1) selon l'une des revendications 7 à 8, dans lequel le premier renfort et le deuxième renfort sont identiques.

10. Composant horloger ou joaillier (1) selon l'une des revendications 7 à 9, dans lequel un premier taux de fibre de la première pièce composite (1a, 101) est supérieur à un deuxième taux de fibre de la deuxième pièce composite (10, 11, 102).

11. Composant horloger ou joaillier (1) selon l'une des revendications 7 à 10, dans lequel la première pièce composite (1a, 101) comprend des premières fibres et la deuxième pièce composite (10, 11, 102) comprend des deuxièmes fibres, et dans lequel les premières fibres et les deuxièmes fibres sont choisies parmi des fibres longues ou des fibres courtes.

12. Composant horloger ou joaillier (1) selon l'une des revendications 7 à 11, dans lequel la première pièce composite (1a, 101) ou la deuxième pièce composite (10, 11, 102) comprend des nanotubes ou des particules.

13. Composant horloger ou joaillier (1) selon l'une des revendications 7 à 12, dans lequel la première pièce composite (1a, 101) comprend au moins une contreforme de la deuxième pièce composite (10, 11, 102).

14. Composant horloger ou joaillier (1) selon l'une des revendications 7 à 13, dans lequel l'une de la première pièce composite (1a, 101) ou de la deuxième pièce composite (10, 11, 101) comprend au moins une projection, et l'autre de la première pièce composite (1a, 101) ou de la deuxième pièce composite (10, 11, 102) comprend au moins un renfoncement agencé pour recevoir l'au moins une projection.

15. Composant horloger ou joaillier (1) selon l'une des revendications 7 à 14, dans lequel au moins une de la première pièce composite (1a, 101) ou de la deuxième pièce composite (10, 11, 102) comprend une surface affectée par abrasion recouverte par la couche intermédiaire.

## Patentansprüche

1. Verfahren zur Herstellung einer Uhren- oder Schmuckkomponente (1), das die folgenden Schritte umfasst:
- Bereitstellen eines ersten Verbundteils (1a, 101) mit einer ersten Verstärkung und einer ersten Matrix, das ein erstes Harz umfasst,
- Bereitstellen eines zweiten Verbundteils (10, 11, 102) mit einer zweiten Verstärkung und einer zweiten Matrix, das ein zweites Harz umfasst,
- Befestigen des ersten Verbundteils (1a, 101) am zweiten Verbundteil (10, 11, 102) durch Polymerisieren einer Grenzfläche zwischen dem ersten Verbundteil (1a, 101) und dem zweiten Verbundteil (10, 11, 102), um so die Uhren- oder Schmuckkomponente (1) zu bilden, wobei das Verfahren **dadurch gekennzeichnet ist, dass** das erste und das zweite Harz thermoplastische Harze sind.

2. Herstellungsverfahren nach vorhergehendem Anspruch, wobei die Grenzfläche eine Zwischenschicht ist, die ein drittes thermoplastisches Harz umfasst.

3. Herstellungsverfahren nach vorhergehendem Anspruch, das ferner den folgenden Schritt umfasst:
- Hinzufügen eines Aktivators zu der Zwischenschicht.

4. Herstellungsverfahren nach einem der Ansprüche 2 bis 3, das ferner den folgenden Schritt umfasst:
- Erwärmen der Zwischenschicht zwischen dem ersten Verbundteil (1a, 101) und dem zweiten Verbundteil (10, 11, 102).

5. Herstellungsverfahren nach einem der Ansprüche 2 bis 4, wobei mindestens zwei von der ersten Matrix, von der zweiten Matrix und von der Zwischenschicht aus demselben Material hervorgegangen sind.

6. Herstellungsverfahren nach einem der vorhergehenden Ansprüche, wobei die erste Verstärkung und die zweite Verstärkung unterschiedlich sind.

7. Uhren- oder Schmuckkomponente (1), umfassend:
- ein erstes Verbundteil (1a, 101) mit einer ersten Verstärkung und einer ersten Matrix, das ein erstes Harz umfasst,
- ein zweites Verbundteil (10, 11, 102) mit einer zweiten Verstärkung und einer zweiten Matrix, das ein zweites Harz umfasst,
- eine Zwischenschicht zwischen dem ersten Verbundteil (1a, 101) und dem zweiten Verbundteil (10, 11, 102), wobei die Zwischenschicht ein drittes Harz umfasst, wobei die Komponente **dadurch gekennzeichnet ist, dass** das erste, das zweite und das dritte Harz thermoplastische Harze sind.

8. Uhren- oder Schmuckkomponente (1) nach vorhergehendem Anspruch, wobei mindestens zwei von der ersten Matrix, von der zweiten Matrix und von der Zwischenschicht aus demselben Material hervorgegangen sind.

9. Uhren- oder Schmuckkomponente (1) nach einem der Ansprüche 7 bis 8, wobei die erste Verstärkung und die zweite Verstärkung identisch sind.

10. Uhren- oder Schmuckkomponente (1) nach einem der Ansprüche 7 bis 9, wobei ein erster Faseranteil des ersten Verbundteils (1a, 101) größer ist als ein zweiter Faseranteil des zweiten Verbundteils (10, 11, 102).

11. Uhren- oder Schmuckkomponente (1) nach einem der Ansprüche 7 bis 10, wobei das erste Verbundteil (1a, 101) erste Fasern umfasst und das zweite Verbundteil (10, 11, 102) zweite Fasern umfasst, und wobei die ersten Fasern und die zweiten Fasern aus langen Fasern oder kurzen Fasern ausgewählt sind.

12. Uhren- oder Schmuckkomponente (1) nach einem der Ansprüche 7 bis 11, wobei das erste Verbundteil (1a, 101) oder das zweite Verbundteil (10, 11, 102) Nanoröhren oder Partikel umfasst.

13. Uhren- oder Schmuckkomponente (1) nach einem der Ansprüche 7 bis 12, wobei das erste Verbundteil (1a, 101) mindestens eine Gegenform des zweiten Verbundteils (10, 11, 102) umfasst.

14. Uhren- oder Schmuckkomponente (1) nach einem der Ansprüche 7 bis 13, wobei entweder das erste Verbundteil (1a, 101) oder das zweite Verbundteil (10, 11, 101) mindestens einen Vorsprung umfasst und das andere, entweder das erste Verbundteil (1a, 101) oder das zweite Verbundteil (10, 11, 102), mindestens eine Vertiefung umfasst, die zur Aufnahme des mindestens einen Vorsprungs eingerichtet ist.

15. Uhren- oder Schmuckkomponente (1) nach einem der Ansprüche 7 bis 14, wobei mindestens entweder das erste Verbundteil (1a, 101) oder das zweite Verbundteil (10, 11, 102) eine durch Abrieb beeinträchtigte Oberfläche aufweist, die von der Zwischenschicht bedeckt ist.

## Claims

1. A process for manufacturing a horological or jewelry component (1) comprising the following steps:
- providing a first composite part (1a, 101) with a first reinforcement and a first matrix comprising a first resin,
- providing a second composite part (10, 11, 102) with a second reinforcement and a second matrix comprising a second resin,
- fixing the first composite part (1a, 101) to the second composite part (10, 11, 102) by polymerizing an interface between the first composite part (1a, 101) and the second composite part (10, 11, 102), so as to form the horological or jewelry component (1), the process being **characterized in that** the first and second resins are thermoplastic resins.

2. The manufacturing process according to the preceding claim, wherein the interface is an intermediate layer comprising a third thermoplastic resin.

3. The manufacturing process according to the preceding claim, further comprising the following step:
- adding an activator to the intermediate layer.

4. The manufacturing process according to any one of claims 2 to 3, further comprising the following step:
- heating the intermediate layer between the first composite part (1a, 101) and the second composite part (10, 11, 102).

5. The manufacturing process according to any one of claims 2 to 4, wherein at least two of the first matrix, the second matrix and the intermediate layer are made from the same material.

6. The manufacturing process according to any one of the preceding claims, wherein the first reinforcement and the second reinforcement are different.

7. A horological or jewelry component (1) comprising:
- a first composite part (1a, 101) with a first reinforcement and a first matrix comprising a first resin,
- a second composite part (10, 11, 102) with a second reinforcement and a second matrix comprising a second resin,
- an intermediate layer between the first composite part (1a, 101) and the second composite part (10, 11, 102), the intermediate layer comprising a third resin, the component being **characterized in that** the first, second and third resins are thermoplastic resins.

8. The horological or jewelry component (1) according to the preceding claim, wherein at least two of the first matrix, the second matrix and the intermediate layer are made from the same material.

9. The horological or jewelry component (1) according to any one of claims 7 to 8, wherein the first reinforcement and the second reinforcement are identical.

10. The horological or jewelry component (1) according to any one of claims 7 to 9, wherein a first fiber ratio of the first composite part (1a,101) is greater than a second fiber ratio of the second composite part (10, 11, 102).

11. The horological or jewelry component (1) according to any one of claims 7 to 10, wherein the first composite part (1a, 101) comprises first fibers and the second composite part (10, 11, 102) comprises second fibers, and wherein the first fibers and the second fibers are selected from long fibers or short fibers.

12. The horological or jewelry component (1) according to any one of claims 7 to 11, wherein the first composite part (1a, 101) or the second composite part (10, 11, 102) comprises nanotubes or particles.

13. The horological or jewelry component (1) according to any one of claims 7 to 12, wherein the first composite part (1a, 101) comprises at least one countermold of the second composite part (10, 11, 102).

14. The horological or jewelry component (1) according to any one of claims 7 to 13, wherein one of the first composite part (1a, 101) or of the second composite part (10, 11, 101) comprises at least one projection, and the other of the first composite part (1a, 101) or of the second composite part (10, 11, 102) comprises at least one recess arranged to receive at least one projection.

15. The horological or jewelry component (1) according to any one of claims 7 to 14, wherein at least one of the first composite part (1a, 101) or of the second composite part (10, 11, 102) comprises an abrasion-affected surface covered by the intermediate layer.
